# EUROPÄISCHE PATENTSCHRIFT

(11) **EP 0 791 421 B1**
(45) Veröffentlichungstag und Bekanntmachung des Hinweises auf die Patenterteilung: **05.04.2000**
(21) Anmeldenummer: 97810088.1
(22) Anmeldetag: 21.02.1997
(51) Int. Cl.: B23B 29/034

(54) **Verbindung zwischen einem Schneidenhalter und einem Werkzeugträger eines Ausdrehkopfes**
Fixture between an insert holder and a tool holder of a boring head
Fixation entre le porte-plaquette et le porte-outil d'une tête à aléser

(30) Priorität: 22.02.1996 CH 45596
(43) Veröffentlichungstag der Anmeldung: 27.08.1997
(73) Patentinhaber: Heinz Kaiser AG, 8153 Rümlang (CH)
(72) Erfinder: Kaiser, Heinz, 8304 Wallisellen (CH); Pape, Dieter, 8153 Rümlang (CH); Woerz, Hans, 8156 Oberhasli (CH)
(74) Vertreter: Groner, Manfred

(56) Entgegenhaltungen:
- EP-A- 0 249 892
- WO-A-91/02614

## Beschreibung

Die Erfindung betrifft einen Ausdrehkopf mit Feinverstellmechanismus mit einem Schneidenhalter und einem Werkzeugträger, und mit einer Spannschraube zum lösbaren Verbinden des Schneidenhalters mit dem Werkzeugträger.

Ein Ausdrehkopf dieser Art ist durch die CH-A-641 706 bekannt geworden. Der Schneidenhalter ist hier in eine schräg zur Verstellrichtung des Werkzeugträgers verlaufende Ausnehmung des Werkzeugträgers eingesetzt und mit einer Schraube fixiert. Aehnliche Verbindungen sind im Stand der Technik durch die EP-A-0 478 239 und durch die DE-A-35 08 434 bekannt geworden. Bekannt ist zudem ein Ausdrehkopf, bei dem der Werkzeugträger und der Schneidenhalter mittels einer Kerbverzahnung als Drehsicherung miteinander verbunden sind. Bekannt ist zudem ein Ausdrehkopf, bei dem der Werkzeugträger eine schräg zur Verstellrichtung des Werkzeugträgers verlaufende Stirnfläche aufweist, an welche der mit einer entsprechend schrägen Fläche versehene Schneidenhalter mittels einer Spannschraube angepresst ist.

Die oben genannten bekannten Ausdrehköpfe weisen jeweils einen Hauptkörper auf, in dem der Werkzeugträger zur Einstellung des zu bearbeitenden Bohrungsdurchmessers radial verschiebbar ist. Die Verschiebung erfolgt über eine im Hauptkörper gelagerte Verstellschraube mit einem Feingewinde. Am Werkzeugträger ist der Schneidenhalter angeordnet, an dem eine Schneidplatte, beispielsweise eine Wendeplatte aus Hartmetall lösbar angebracht ist. Abgenützte Schneiden oder ein beschädigter Schneidenhalter können leicht ausgewechselt werden. Für die Verbindung zwischen dem Schneidenhalter und dem Werkzeugträger bestehen die praktischen Anforderungen, dass diese sicher, möglichst starr, verdrehsicher und eindeutig positionierbar sein soll. Der Schneidenhalter soll zudem einfach auswechselbar sein. Diese Anforderungen sind bei den bekannten Verbindungen nur teilweise oder ungenügend erfüllt. Dies insbesondere im Hinblick auf die Entwicklung zu sehr harten und hitzebeständigen Schneidstoffen, die zu immer höhren-Zerspannungsleistungen führt. Diese Entwicklung führt zunehmend zu höheren Schnittgeschwindigkeiten. Da nun der Ausdrehkopf das Bindeglied zwischen der Schneide und der Arbeitsspindel einer Werkzeugmaschine bildet, muss die Leistung der Werkzeugmaschine möglichst optimal auf die Schneide übertragen werden. Entscheidend für ein einwandfreies Bearbeitungsergebnis ist die Verbindung des Schneidenhalters mit dem Werkzeugträger.

Der Erfindung liegt die Aufgabe zugrunde, einen Ausdrehkopf der genannten Gattung zu schaffen, welcher die genannten praktischen Anforderungen weitergehend erfüllt. Insbesondere soll der erfindungsgemässe Ausdrehkopf für hohe Zerspannungsleistungen ausreichend starr sein. Der Schneidenhalter soll zudem um 180° versetzt angebracht werden können und dadurch ein Hinterdrehen einer Präzisionsbohrung mit einem Standardwerkzeug ermöglichen.

Die Aufgabe ist bei einem gattungsgemässen Ausdrehkopf dadurch gelöst, dass der Schneidenhalter eine konische Quernut und der Werkzeugträger einen entsprechenden Mitnahmekeil auf ihren entsprechenden Stirnseiten aufweisen und der Mitnahmekeil gegenüber der Quernut ein bestimmtes Uebermass aufweist, derart, dass der Werkzeugträger und der Schneidenhalter beim Festziehen der Spannschraube im Bereich der Quernut bzw. der Mitnahmekeil eine elastische Verformung erfahren und dass die Stirnseiten des Werkzeugträgers und des Schneidenhalters seitlich neben der Quernut und dem Mitnahmekeil flächig und eben aneinander anliegen. Bei dem erfindungsgemässen Ausdrehkopf ist eine mit einer Kerbverzahnung vergleichbare Drehsicherung erreichbar, die bei einer Kerbverzahnung erforderliche hohe Herstellgenauigkeit und mögliche Teilungsfehler sind jedoch vermieden. Bei der erfindungsgemässen Verbindung ist der Schneidenhalter stirnseitig auf den Werkzeugträger aufgesetzt. Durch das elastische Zusammenwirken der Quernut mit dem Mitnahmekeil in Kombination mit der flächigen Anlage des Schneidenhalters am Werkzeugträger werden Verschiebungen oder Vibrationen auch bei hohen Schnittkräften vermieden. Die beim Festziehen der Spannschraube erfolgenden elastischen Verformungen des Werkzeugträgers und des Schneidenhalters können vergleichsweise geringfügig sein.

Um eine grössere elastische Verformbarkeit im Bereich der konischen Quernut zu erreichen, können gemäss einer Weiterbildung der Erfindung mehrere Entlastungsnuten vorgesehen sein. Solche Entlastungsnuten erlauben zudem die Vergrössung von Fabrikationstoleranzen und damit eine weitere Vereinfachung der Herstellung. Durch eine konische Ausbildung des Kopfes der Spannschraube und einer entsprechenden Ansenkung im Schneidenhalter kann die Positionierung des Schneidenhalters auf dem Werkzeugträger noch weiter präzisiert werden. In jedem Fall kann der Schneidenhalter um 180° versetzt am Werkzeugträger angebracht werden. Weitere vorteilhafte Merkmale ergeben sich den abhängigen Patentansprüchen, der nachfolgenden Beschreibung sowie der Zeichnung. Ein Ausführungsbeispiel der erfindungsgemässen Verbindung wird nachfolgend anhand der Zeichnung näher erläutert. Es zeigen:
- Fig. 1: eine Ansicht eines teilweise geschnittenen Ausdrehkopfes,
- Fig. 2: eine Ansicht des Ausdrehkopfes, wobei der Schneidenhalter weggelassen ist,
- Fig. 3: eine Ansicht des Schneidenhalters,
- Fig. 4: eine weitere Ansicht des Schneidenhalters,
- Fig. 5: ein Teilschnitt durch einen Ausdrehkopf mit einer Variante des Schneidenhalters,
- Fig. 6: eine Ansicht eines erfindungsgemässen Ausdrehkopfes, und
- Fig. 7: eine Ansicht gemäss Fig. 6, jedoch mit einem um 180° versetzt angebrachten Schneidenhalter.

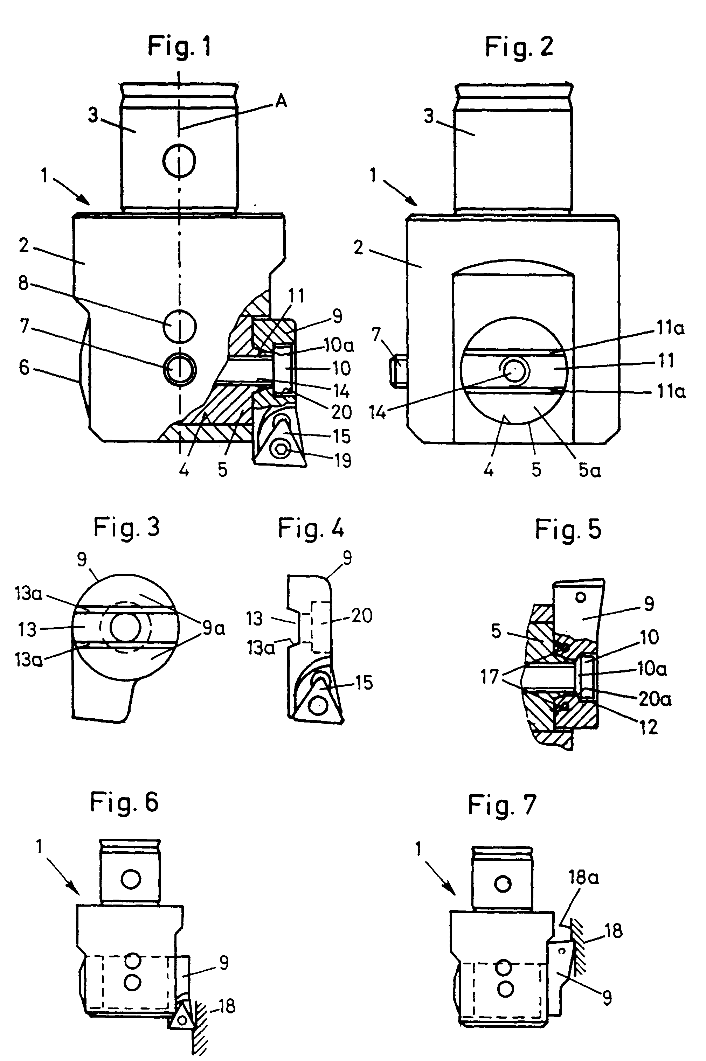

Die Fig. 1 zeigt einen Ausdrehkopf 1 mit einem Hauptkörper 2, an dem ein Verbindungsschaft 3 angeordnet ist. Am Schaft 3 wird der Ausdrehkopf in an sich bekannter Weise mit einer Arbeitsspindel einer hier nicht gezeigten Werkzeugmaschine lösbar verbunden. Quer zur Drehachse A des Werkzeugkopfes verläuft eine durchgehende Bohrung 4, in die ein Werkzeugträger 5 eingesetzt und mittels einer Verstellschraube 6 radial verstellbar ist. Ein geeigneter Verstellmechanismus ist aus der CH-A-641 706 bekannt. Der Werkzeugträger 5 ist in der Bohrung 4 gegen ein Verdrehen in an sich bekannter Weise gesichert.

Am Werkzeugträger 5 ist mittels einer Spannschraube 10 ein Schneidenhalter 9 lösbar befestigt, an dem mittels einer Klemmschraube 19 eine Wendeplatte 15 befestigt ist. Der aus einem Stück hergestellte Schneidenhalter 9 weist eine durchgehende Stufenbohrung 20 auf, in die eine in eine Gewindebohrung 14 des Werkzeugträgers eingeschraubte Spannschraube 10 eingesetzt ist. Wie die Figuren 3 und 4 zeigen, ist in eine am Werkzeugträger 5 anliegende Innenseite des Schneidenhalters 9 eine Quernut 13 eingearbeitet, die beidseitig offen ist und die sich über die Bohrung 20 hinweg erstreckt. Die Seitenflanken 13a der Quernut 13 sind gemäss Fig. 4 zur Verstellrichtung des Werkzeugträgers 5 quer angeordnet. In diese Quernut 13 greift ein Mitnahmekeil 11 ein, der auf der Stirnseite des Werkzeugträgers 5 angeordnet ist, und der sich im wesentlichen über die gesamte Stirnseite des Werkzeugträgers 5 erstreckt, wie die Fig. 2 deutlich zeigt. Dieser Keil 11 weist ebenfalls schräg verlaufende Flanken lla auf. Dieser Mitnahmekeil 11 weist gegenüber der Quernut 13 ein bestimmtes Uebermass auf, derart, dass beim Festziehen der Spannschraube 10 der Mitnahmekeil 11 und der Schneidenhalter 9 im Bereich der Quernut 13 geringfügig elastisch verformt werden. Das Uebermass ist so eingestellt, dass die für die Verformung erforderlichen Kräfte mit einem an der Spannschraube 10 angesetzten Inbusschlüssel aufgebracht werden können. Die elastische Verformung erstreckt sich vorzugsweise über die gesamte Länge der Quernut 13 bzw. des Mitnahmekeils 11. Der Mitnahmekeil 11 greift somit klemmend über seine gesamte Länge in die Quernut 13 ein.

Bei festgezogener Spannschraube 10 sind Flächen 9a des Schneidenhalters 9 an entsprechenden Flächen 5a des Werkzeugträgers 5 angepresst. Bei festgezogener Spannschraube 10 sind somit die Seitenflanken 13a und die Flächen 9a des Schneidenhalters an die Flanken 11a und die Flächen 5a angepresst. Der Schneidenhalter 9 liegt somit im wesentlichen über den gesamten Querschnitt des Werkzeugträgers 5 an diesem an.

Um eine grössere elastische Verformbarkeit im Bereich der konischen Quernut 13 des Schneidenhalters 9 zu erhalten, kann dieser gemäss Fig. 5 zwei oder mehrere parallel zur Nut 13 verlaufende Entlastungsnuten 17 aufweisen. Wie die Fig. 5 zeigt, kann der Schraubenkopf 10 eine konische Anlagefläche 10a aufweisen, die an einer entsprechenden konischen Ansenkung des Schneidenhalters 9 anliegt.

Die Figuren 6 und 7 zeigen den Ausdrehkopf 1 mit um 180° versetzt angebrachtem Schneidenhalter 9. Zum Versetzen des Schneidenhalters 9 muss lediglich die Spannschraube 10 gelöst und der Schneidenhalter 9 um 180° gedreht werden. Nach dem Festziehen der Spannschraube 10 ist der Schneidenhalter 9 in gleicher Weise starr mit dem Werkzeugträger 5 verbunden. In der Anordnung gemäss Fig. 7 kann in einem Werkstück 18 eine Bohrung 18a hinterdreht werden.

## Patentansprüche

1. Ausdrehkopf (1) mit Feinverstellmechanismus mit einem Schneidenhalter (9) und einem Werkzeugträger (5), und mit einer Spannschraube (10) zum lösbaren Verbinden des Schneidenhalters (9) mit dem Werkzeugträger (5), dadurch gekennzeichnet, dass der Schneidenhalter (9) eine konische Quernut (13) und der Werkzeugträger (5) einen entsprechenden Mitnahmekeil (11) auf ihren entsprechenden Stirnseiten (5a, 9a) aufweisen und der Mitnahmekeil (11) gegenüber der Quernut (13) ein bestimmtes Uebermass aufweist, derart, dass der Werkzeugträger (5) und der Schneidenhalter (9) beim Festziehen der Spannschraube (10) im Bereich der Quernut (13) bzw. der Mitnahmekeil (11) eine elastische Verformung erfahren und dass die Stirnseiten (5a, 9a) des Werkzeugträgers (5) und des Schneidenhalters (9) seitlich neben der Quernut (13) und dem Mitnahmekeil (11) flächig und eben aneinander anliegen.

2. Ausdrehkopf nach Anspruch 1, gekennzeichnet durch wenigstens eine Entlastungsnut (17) im Schneidenhalter (9).

3. Ausdrehkopf nach Anspruch 1 oder 2, dadurch gekennzeichnet, dass die Spannschraube (10) den Schneidenhalter (9) etwa mittig zur Quernut (13) durchgreift.

4. Ausdrehkopf nach einem der Ansprüche 1 bis 3, dadurch gekennzeichnet, dass die Spannschraube (10) etwa mittig zum Mitnahmekeil (11) in diesen eingeschraubt ist.

5. Ausdrehkopf nach einem der Ansprüche 1 bis 4, dadurch gekennzeichnet, dass der Werkzeugträger (5) seitlich neben dem Mitnahmekeil (11) und der Schneidenhalter (9) seitlich neben der Quernut (13) jeweils in gleicher Ebene liegende Flächen (9a,5a) aufweisen, die bei festgezogener Spannschraube (10) flächig aneinander anliegen.

6. Ausdrehkopf nach einem der Ansprüche 1 bis 5, dadurch gekennzeichnet, dass die konische Quernut (13) sich im wesentlichen über die ganze Breite des Schneidenhalters (9) erstreckt und seitlich offen ist.

7. Ausdrehkopf nach einem der Ansprüche 1 bis 6, dadurch gekennzeichnet, dass der Mitnahmekeil (11) sich im wesentlichen über die gesamte Breite des Werkzeugträgers (5) erstreckt.

8. Ausdrehkopf nach einem der Ansprüche 1 bis 7, dadurch gekennzeichnet, dass die Spannschraube (10) einen konischen Ansatz (10a) und der Schneidenhalter (9) eine entsprechende konische Ansenkung in einer durchgehenden Bohrung (12) aufweist.

## Claims

1. Boring head (1) with a fine-adjustment mechanism, a tool bit holder (9) and a tool carrier (5), and a locking screw (10) for releasably connecting the tool bit holder (9) to the tool carrier (5), characterised in that the tool bit holder (9) has a conical transverse groove (13) and the tool carrier (5) has a corresponding driving key (11) on their corresponding end faces (5a, 9a) and the driving key (11) is oversized by a specific amount compared to the transverse groove (13), in such a manner that the tool carrier (5) and the tool bit holder (9) undergo elastic deformation in the region of the transverse groove (13) and the driving key (11) respectively when the locking screw (10) is tightened and that the end faces (5a, 9a) of the tool carrier (5) and the tool bit holder (9) bear flat against one another laterally alongside the transverse groove (13) and the driving key (11).

2. Boring head according to claim 1, characterised by at least one load-relieving groove (17) in the tool bit holder (9).

3. Boring head according to claim 1 or claim 2, characterised in that the locking screw (10) penetrates through the tool bit holder (9) substantially centrically relative to the transverse groove (13).

4. Boring head according to one of claims 1 to 3, characterised in that the locking screw (10) is screwed into the driving key (11) substantially centrically thereto.

5. Boring head according to one of claims 1 to 4, characterised in that the tool carrier (5) and the tool bit holder (9) have surfaces (5a, 9a) situated in the same plane laterally alongside the driving key (11) and laterally alongside the transverse groove (13) respectively, these surfaces bearing flat against one another when the locking screw (10) is tightened.

6. Boring head according to one of claims 1 to 5, characterised in that the conical transverse groove (13) extends essentially over the entire width of the tool bit holder (9) and is open laterally.

7. Boring head according to one of claims 1 to 6, characterised in that the driving key (11) extends essentially over the entire width of the tool carrier (5).

8. Boring head according to one of claims 1 to 7, characterised in that the locking screw (10) has a conical shoulder (10a) and the tool bit holder (9) has a corresponding conical countersink in a through bore (12).

## Revendications

1. Tête d'alésage (1) à mécanisme de réglage précis, comprenant un porte-plaquette (9) et un porte-outil (5), ainsi qu'une vis de serrage (10) pour établir la liaison libérable dudit porte-plaquette (9) avec ledit porte-outil (5), caractérisée par le fait que le porte-plaquette (9) et le porte-outil (5) comportent, sur leurs faces extrêmes correspondantes (Sa, 9a), une saignée transversale conique (13) et un coin entraîneur correspondant (11), et le coin entraîneur (11) présente un surdimensionnement déterminé, vis-à-vis de la saignée transversale (13), de façon telle que le porte-outil (5) et le porte-plaquette (9) subissent une déformation élastique dans la région considérée de la saignée transversale (13) ou du coin entraîneur (11), lors du blocage de la vis de serrage (10), et que les faces extrêmes (5a, 9a) du porte-outil (5) et du porte-plaquette (9) portent à plat les unes contre les autres, par leurs superficies, en jouxtant latéralement ladite saignée transversale (13) et ledit coin entraîneur (11).

2. Tête d'alésage selon la revendication 1, caractérisée par au moins une rainure de soulagement (17) dans le porte-plaquette (9).

3. Tête d'alésage selon la revendication 1 ou 2, caractérisée par le fait que la vis de serrage (10) traverse le porte-plaquette (9) sensiblement au centre vis-à-vis de la saignée transversale (13).

4. Tête d'alésage selon l'une des revendications 1 à 3, caractérisée par le fait que la vis de serrage (10) est vissée, dans le coin entraîneur (11), à peu près centralement vis-à-vis de ce dernier.

5. Tête d'alésage selon l'une des revendications 1 à 4, caractérisée par le fait que le porte-outil (5) et le porte-plaquette (9) possèdent des surfaces (9a, 5a) qui sont respectivement situées dans un même plan, jouxtent respectivement le coin entraîneur (11) et la saignée transversale (13) dans le sens latéral, et sont réciproquement en contact par leurs superficies lorsque la vis de serrage (10) est bloquée.

6. Tête d'alésage selon l'une des revendications 1 à 5, caractérisée par le fait que la saignée transversale conique (13) s'étend pour l'essentiel sur toute la largeur du porte-plaquette (9), et est ouverte latéralement.

7. Tête d'alésage selon l'une des revendications 1 à 6, caractérisée par le fait que le coin entraîneur (11) s'étend, pour l'essentiel, sur la largeur totale du porte-outil (5).

8. Tête d'alésage selon l'une des revendications 1 à 7, caractérisée par le fait que la vis de serrage (10) comporte un appendice tronconique (10a), et le porte-plaquette (9) présente un encaissement tronconique correspondant dans un perçage traversant (12).
